# EUROPÄISCHE PATENTSCHRIFT

(11) **EP 4 111 849 B1**
(45) Veröffentlichungstag und Bekanntmachung des Hinweises auf die Patenterteilung: **03.09.2025**
(21) Anmeldenummer: 21183107.8
(22) Anmeldetag: 01.07.2021
(51) Int. Cl.: A01G 3/037, A01G 3/053, A01G 3/06, A01G 3/08, A01G 20/30, A01D 34/90

(54) **VERFAHREN ZUM BETREIBEN EINES HANDGEFÜHRTEN BEARBEITUNGSGERÄTS UND BEARBEITUNGSSYSTEM**
METHOD FOR OPERATING A HANDHELD PROCESSING DEVICE AND PROCESSING SYSTEM
PROCÉDÉ DE FONCTIONNEMENT D'UN APPAREIL D'USINAGE GUIDÉ À LA MAIN ET SYSTÈME D'USINAGE

(43) Veröffentlichungstag der Anmeldung: 04.01.2023
(73) Patentinhaber: Andreas Stihl AG & Co. KG, 71336 Waiblingen (DE)
(72) Erfinder: Reitter, Michael, 6300 Wörgl (AT); Fuchs, Domenik, 6322 Kirchbichl (AT)
(74) Vertreter: Patentanwälte Ruff, Wilhelm, Beier, Dauster & Partner mbB

(56) Entgegenhaltungen:
- EP-A1- 3 031 314
- EP-A1- 3 120 684
- DE-A1- 102019 220 568
- SE-C2- 543 699

## Beschreibung

### ANWNDUNGSGEBIET UND STAND DER TECHNIK

Die Erfindung bezieht sich auf ein Verfahren zum Betreiben eines handgeführten Bearbeitungsgeräts und ein Bearbeitungssystem aufweisend ein handgeführtes Bearbeitungsgerät.

Die SE 543 699 C2 offenbart ein System zum Schutz eines Bedieners eines Elektrowerkzeugs umfassend einen ersten Satz tragbarer Sensoren, die der Bediener trägt, einen zweiten Satz tragbarer Sensoren, die der Bediener trägt, einen ersten Werkzeugsensor, der am Elektrowerkzeug dort angeordnet ist, wo der erste Werkzeugsensor dazu konfiguriert ist, um mit dem ersten Satz tragbarer Sensoren zu kommunizieren, einen zweiten Werkzeugsensor, der am Elektrowerkzeug dort angeordnet ist, wo der zweite Werkzeugsensor dazu konfiguriert ist, um mit dem zweiten Satz tragbarer Sensoren zu kommunizieren, und eine Steuerung. Die Steuerung ist so konfiguriert, dass sie basierend auf Abständen zwischen dem ersten Werkzeugsensor und dem ersten Satz tragbarer Sensoren und zwischen dem zweiten Werkzeugsensor und dem zweiten Satz tragbarer Sensoren bestimmt, ob eine Schutzmaßnahme in Bezug auf das Elektrowerkzeug eingeleitet werden soll.

Die DE 10 2019 220 568 A1 offenbart ein Elektrogerät mit zumindest einem Handgriff zur sicheren Führung des Elektrogeräts durch einen Bediener und mit einem Sicherheitssystem, wobei am Handgriff mindestens zwei voneinander beabstandete Griffbereiche mit jeweils zumindest einem Berührungssensormodul vorgesehen sind. Jedes Berührungssensormodul weist zumindest zwei Sensorelektroden auf, die jeweils elektrisch mit dem Sicherheitssystem verbunden sind. Das Sicherheitssystem ist derart ausgebildet, dass der Bediener zum sicheren Betrieb des Elektrogeräts mindestens eine der ersten und mindestens eine der zweiten Sensorelektroden der Berührungssensormodule mit zumindest einem Körperteil, insbesondere mit einem Teil zumindest einer Hand, berühren muss. Darüber hinaus offenbart die DE 10 2019 220 568 A1 ein Verfahren zum Betreiben eines Elektrogeräts durch einen Bediener, wobei in einem ersten Schritt der Bediener vor Inbetriebnahme des Elektrogeräts einen elektromechanischen Taster betätigen muss, um das Sicherheitssystem und die Berührungssensormodule des Elektrogeräts mit Energie zu versorgen.

Die EP 3 120 684 A1 offenbart einen elektrischen Rasenmäher, der einen Lenker nach hinten zum Schieben des Rasenmähers durch einen Bediener aufweist. Der Rasenmäher umfasst ein Sicherheitssystem, das so konfiguriert ist, dass es die Zündung des Rasenmähers nur dann ermöglicht, wenn der Lenker von dem Bediener ergriffen wird, und das außerdem so konfiguriert ist, dass es den Rasenmäher ausschaltet in dem Moment, in dem der Bediener den Lenker loslässt.

Die EP 3 031 314 A1 offenbart eine Gartengerätebedienvorrichtung mit zumindest einer Bedieneinheit, die zumindest ein von einem Bediener betätigbares Bedienelement und zumindest ein von einem Bediener betätigbares weiteres Bedienelement aufweist, und mit zumindest einer Elektronikeinheit, die zumindest dazu vorgesehen ist, zumindest in Abhängigkeit von einer Betätigung des Bedienelements und des weiteren Bedienelements zumindest eine Energieversorgung einer Antriebseinheit zu schalten, wobei das Bedienelement und/oder das weitere Bedienelement als elektronische/s Bedienelement/e ausgebildet sind/ist. Die Elektronikeinheit ist zumindest dazu vorgesehen, zumindest in Abhängigkeit von einer als Betätigungsabfolge des Bedienelements und/oder des weiteren Bedienelements ausgebildeten Betätigungskenngröße zumindest die Energieversorgung der Antriebseinheit zu schalten.

### AUFGABE UND LÖSUNG

Der Erfindung liegt als Aufgabe die Bereitstellung eines Verfahrens zum Betreiben eines handgeführten Bearbeitungsgeräts und eines Bearbeitungssystems aufweisend ein handgeführtes Bearbeitungsgerät zugrunde, das jeweils verbesserte Eigenschaften aufweist.

Die Erfindung löst diese Aufgabe durch die Bereitstellung eines Verfahrens mit den Merkmalen des Anspruchs 1 und ein Bearbeitungssystem mit den Merkmalen des Anspruchs 13. Vorteilhafte Weiterbildungen und/oder Ausgestaltungen der Erfindung sind in den abhängigen Ansprüchen beschrieben.

Das erfindungsgemäße Verfahren ist zum Betreiben eines handgeführten Bearbeitungsgeräts ausgebildet bzw. vorgesehen. Das Bearbeitungsgerät weist eine benutzerbetätigbare Bediensensoreinrichtung auf. Die Bediensensoreinrichtung definiert bzw. weist eine Mehrzahl von, insbesondere räumlich, verschiedenen Erfassungspositionen auf. Das Verfahren weist die Schritte auf: a) Erfassen einer Abfolge von Betätigungen der Bediensensoreinrichtung an verschiedenen Erfassungspositionen der Mehrzahl von Erfassungspositionen. b) falls die erfasste Abfolge einer vorgegebenen Abfolge entspricht, insbesondere gleicht, Kalibrieren der Bediensensoreinrichtung für mindestens eine Erfassungsposition der Mehrzahl von Erfassungspositionen basierend auf mindestens einer der Betätigungen der erfassten Betätigungen.

Dies ermöglicht ein Auslösen des Kalibrierens der Bediensensoreinrichtung durch ein Betätigen der Bediensensoreinrichtung selbst. Dies ermöglicht einen Synergieeffekt. In anderen Worten: Zum Auslösen des Kalibrierens der Bediensensoreinrichtung braucht oder kann nicht ein Betätigen einer getrennten benutzerbetätigbaren Einrichtung notwendig sein.

Insbesondere kann das Verfahren automatisch und/oder zum automatischen Betreiben des Bearbeitungsgeräts sein.

Der Begriff "selbsttätig" kann synonym für den Begriff "automatisch" verwendet werden.

Das Bearbeitungsgerät kann ein Garten-, Forst-, Bau- und/oder Boden-Bearbeitungsgerät sein. Zusätzlich oder alternativ kann das handgeführte Bearbeitungsgerät bodengeführt und/oder handgetragen sein. Weiter zusätzlich oder alternativ kann handgeführtes, insbesondere handgetragenes, Bearbeitungsgerät bedeuten, dass das Bearbeitungsgerät eine maximale Masse von 100 kg (Kilogramm), insbesondere von 50 kg, insbesondere von 20 kg, aufweisen bzw. haben kann. Weiter zusätzlich oder alternativ kann das Bearbeitungsgerät elektrisch sein.

Die Bediensensoreinrichtung kann elektrisch sein.

Der Begriff "Betätigungspositionen" kann synonym für den Begriff "Erfassungspositionen" verwendet werden. Zusätzlich oder alternativ kann der Begriff "Zone" synonym für den Begriff "Position" verwendet werden.

Das Erfassen kann automatisch sein. Zusätzlich oder alternativ kann das Erfassen ein Erfassen mindestens eines Werts mindestens einer der Betätigungen sein. Weiter zusätzlich oder alternativ braucht oder kann für das Erfassen nicht ein Schwellwert notwendig sein.

Die Betätigungen können durch einen Benutzer bzw. Bediener des Bearbeitungsgeräts sein.

Die Abfolge kann zeitlich sein. Zusätzlich oder alternativ kann die Abfolge von Betätigungen als Geste, insbesondere Streich- und/oder Wischgeste, bezeichnet werden.

Der Begriff "vorbestimmt" oder der Begriff "vordefiniert" kann synonym für den Begriff "vorgegeben" verwendet werden.

Die vorgegebene Abfolge kann Betätigungen, insbesondere Werte der Betätigungen, der Bediensensoreinrichtung an verschiedenen Erfassungspositionen der Mehrzahl von Erfassungspositionen aufweisen bzw. definieren. Zusätzlich oder alternativ kann die vorgegebene Abfolge werksseitig vorgegeben und/oder durch den Benutzer nicht vorgebbar sein.

Das Verfahren, insbesondere der Schritt b), kann aufweisen: Vergleichen der erfassten Abfolge und der vorgegebenen Abfolge miteinander.

Falls die erfasste Abfolge der vorgegebenen Abfolge nicht entspricht, braucht oder kann die Bediensensoreinrichtung nicht kalibriert werden.

Das Kalibrieren kann automatisch sein. Zusätzlich oder alternativ kann das Kalibrieren ein Kalibrieren mindestens eines Werts der Bediensensoreinrichtung sein. Weiter zusätzlich oder alternativ kann das Kalibrieren basierend auf mindestens einer der Betätigungen der in dem Schritt a) bzw. zeitlich vorher erfassten Betätigungen sein.

Die Bediensensoreinrichtung kann zeitlich vor dem Kalibrieren unkalibriert sein.

Der Schritt b) kann zeitlich nach dem Schritt a) ausgeführt werden. Zusätzlich oder alternativ kann das Verfahren, insbesondere können die Schritte a) und b), wiederholt bzw. erneut ausgeführt werden, insbesondere mehrfach.

Die Bediensensoreinrichtung ist als eine kapazitive und/oder resistive Bediensensoreinrichtung ausgebildet. Für eine derartige Bediensensoreinrichtung ist das Kalibrieren besonders vorteilhaft, insbesondere bei mindestens einem äußeren Umwelteinfluss, wie z.B. einer schwankenden Temperatur und/oder einer schwankenden Feuchtigkeit, und/oder bei Betätigung durch mindestens eine feuchte, insbesondere verschwitzte, oder trockne Hand und/oder mindestens eine Hand mit angezogenem, insbesondere feuchtem oder trocknem, Handschuh. In anderen Worten: das Kalibrieren kann auf einen kapazitiven Eingabewert des Benutzers sein. Zusätzlich oder alternativ ermöglicht dies einen Entfall von beweglichen Bedienteilen, wie z.B. einem Bedienhebel, einem Bedientaster, einem Bedienschalter und/oder mindestens einem Bedienseilzug. Die eine kapazitive und/oder resistive Bediensensoreinrichtung ist berührungsempfindlich. Die Betätigungen weisen Berührungen auf, insbesondere können die Betätigungen Berührungen sein.

In einer Weiterbildung der Erfindung ist das Bearbeitungsgerät ein Rasenmäher, ein Vertikutierer, eine Grasschere, eine Kreiselschere, ein Freischneider, eine Heckenschere, ein Heckenschneider, ein Gehölzschneider, eine Säge, insbesondere eine Kettensäge, ein Trennschleifer, ein Hoch-Entaster, eine Astschere, ein Laubbläser, ein Blasgerät, ein Sauggerät, ein Laubsauger, ein Häckselgerät, ein Kehrgerät, eine Kehrwalze, eine Kehrbürste, ein Hochdruckreiniger oder ein Reinigungsgerät. Zusätzlich oder alternativ weist das Bearbeitungsgerät ein Bearbeitungswerkzeug auf. Das Bearbeitungswerkzeug weist einen Faden, insbesondere einen Schneidfaden, ein Messer, insbesondere ein Schneidmesser, ein Schneidblatt, ein Sägeblatt, eine Sägekette, eine Schleifkette, eine Schleifscheibe, ein Messerrad, ein Strömungslaufrad oder ein Fluid auf. Insbesondere ist das Bearbeitungswerkzeug ein Faden, insbesondere ein Schneidfaden, ein Messer, insbesondere ein Schneidmesser, ein Schneidblatt, ein Sägeblatt, eine Sägekette, eine Schleifkette, eine Schleifscheibe, ein Messerrad, ein Strömungslaufrad oder ein Fluid. Für ein derartiges Bearbeitungsgerät und/oder ein derartiges Bearbeitungswerkzeug ist das Kalibrieren besonders vorteilhaft. Insbesondere kann das Bearbeitungswerkzeug beweglich sein.

In einer Weiterbildung der Erfindung weist das Kalibrieren ein Festlegen mindestens eines Betätigungs-Schwellwerts, insbesondere zum Steuern des Bearbeitungsgeräts, auf. Dies ermöglicht ein Steuern des Bearbeitungsgeräts angepasst an einen äußeren Umwelteinfluss, wie z.B. eine Temperatur und/oder eine Feuchtigkeit, und/oder eine Betätigung durch mindestens eine feuchte, insbesondere verschwitzte, oder trockne Hand und/oder mindestens eine Hand mit angezogenem, insbesondere feuchtem oder trocknem, Handschuh. Insbesondere kann das Festlegen automatisch sein. Zusätzlich oder alternativ kann der Betätigungs-Schwellwert ein Betätigungs-Schwellwert, insbesondere einer Betätigung, der Bediensensoreinrichtung sein. Weiter zusätzlich oder alternativ kann der Begriff "Steuer-Schwellwert" synonym für den Begriff "Betätigungs-Schwellwert" verwendet werden.

In einer Weiterbildung der Erfindung weist das Bearbeitungsgerät ein Bearbeitungs-System, insbesondere aufweisend ein bewegliches, insbesondere das, Bearbeitungswerkzeug, und/oder ein Fahr-System auf. Das Verfahren weist den Schritt auf: Steuern des Bearbeitungs-Systems, insbesondere variables Einstellen einer Bewegungsgeschwindigkeit und/oder -drehzahl des Bearbeitungswerkzeugs, und/oder des Fahr-Systems, insbesondere variables Einstellen einer Fahrgeschwindigkeit, als Funktion mindestens einer Betätigung der kalibrierten Bediensensoreinrichtung. Dies, insbesondere das Kalibrieren, ermöglicht ein genaues Steuern, insbesondere bei Erreichung und/oder Überschreitung mindestens des festgelegten Betätigungs-Schwellwerts. Insbesondere kann das Bearbeitungs-System, insbesondere das Bearbeitungswerkzeug, zur Bearbeitung einer Fläche, insbesondere Grünfläche, ausgebildet sein. Zusätzlich oder alternativ kann das Fahr-System zur Fahrt des Bearbeitungsgeräts auf einer, insbesondere der, Fläche, insbesondere Grünfläche, ausgebildet sein. Weiter zusätzlich oder alternativ können/kann das Bearbeitungs-System und/oder das Fahr-System elektrisch und/oder steuerbar sein. Weiter zusätzlich oder alternativ kann das Steuern automatisch sein. Weiter zusätzlich oder alternativ kann das Einstellen ein Einstellen eines Werts der Bewegungsgeschwindigkeit und/oder -drehzahl und/oder eines Werts der Fahrgeschwindigkeit sein. Weiter zusätzlich oder alternativ kann die Formulierung "in Abhängigkeit" synonym für die Formulierung "als Funktion" verwendet werden. Weiter zusätzlich oder alternativ kann mindestens die Betätigung durch den Benutzer sein.

In einer Weiterbildung der Erfindung weist das Bearbeitungsgerät das Bearbeitungs-System, insbesondere aufweisend das bewegliche Bearbeitungswerkzeug, und/oder das Fahr-System auf. Das Verfahren weist den Schritt auf: falls, insbesondere mindestens, die erfasste Abfolge der vorgegebenen Abfolge entspricht, Freigeben des Bearbeitungs-Systems, insbesondere eines Bearbeitungs-Antriebs-Systems des Bearbeitungs-Systems, insbesondere zur Bewegung des Bearbeitungswerkzeugs, und/oder des Fahr-Systems, insbesondere eines Fahr-Antriebs-Systems des Fahr-Systems. Dies ermöglicht eine Vermeidung eines unabsichtlichen Freigebens des Bearbeitungs-Systems und/oder des Fahr-Systems. Zusätzlich oder alternativ ermöglicht dies, insbesondere das Freigeben und das Steuern mittels der Bediensensoreinrichtung, einen Synergieeffekt bzw. eine Übernahme mehrerer Funktionen durch die Bediensensoreinrichtung. Insbesondere kann das Bearbeitungs-System, insbesondere das Bearbeitungswerkzeug, zur Bearbeitung einer Fläche, insbesondere Grünfläche, ausgebildet sein. Zusätzlich oder alternativ kann das Fahr-System zur Fahrt des Bearbeitungsgeräts auf einer, insbesondere der, Fläche, insbesondere Grünfläche, ausgebildet sein. Weiter zusätzlich oder alternativ können/kann das Bearbeitungs-System, insbesondere das Bearbeitungs-Antriebs-System, und/oder das Fahr-System, insbesondere das Fahr-Antriebs-System, elektrisch und/oder freigebbar sein. Weiter zusätzlich oder alternativ kann das Freigeben automatisch sein. Weiter zusätzlich oder alternativ kann der Begriff "Einschalten", "Aktivieren", "Starten" oder "Entsperren" synonym für den Begriff "Freigeben" verwendet werden. Weiter zusätzlich oder alternativ kann das Freigeben ein Freigeben eines Betriebs des Bearbeitungs-Systems und/oder des Fahr-Systems sein. Weiter zusätzlich oder alternativ können/kann das Bearbeitungs-System und/oder das Fahr-System zeitlich vor dem Freigeben gesperrt sein.

In einer Ausgestaltung der Erfindung weist das Verfahren den Schritt auf: falls, insbesondere mindestens, keine Betätigung der Bediensensoreinrichtung, insbesondere mehr, erfasst wird, insbesondere und seitdem eine vorgegebene Nicht-Betätigungs-Zeitdauer abgelaufen ist, Sperren des Bearbeitungs-Systems und/oder des Fahr-Systems. Dies ermöglicht eine Kontrolle einer Anwesenheit und/oder einer Abwesenheit einer Hand des Benutzers an der Bediensensoreinrichtung, insbesondere eines Wegnehmens bzw. eines Verlassens mindestens der Hand von der Bediensensoreinrichtung, bzw. eine Erreichung einer Totmannschaltung. Insbesondere kann der Begriff "Überwachung" oder "Erkennung" synonym für den Begriff "Kontrolle" verwendet werden. Zusätzlich oder alternativ kann die Formulierung "zeitlich danach" synonym für den Begriff "seitdem" verwendet werden. Weiter zusätzlich oder alternativ kann ein vorgegebener Wert der Nicht-Betätigungs-Zeitdauer abgelaufen sein. Weiter zusätzlich oder alternativ kann die vorgegebene Nicht-Betätigungs-Zeitdauer werksseitig vorgegeben und/oder durch den Benutzer nicht vorgebbar sein. Weiter zusätzlich oder alternativ können/kann das Bearbeitungs-System, insbesondere das Bearbeitungs-Antriebs-System, und/oder das Fahr-System, insbesondere das Fahr-Antriebs-System, sperrbar sein. Weiter zusätzlich oder alternativ kann das Sperren automatisch sein. Weiter zusätzlich oder alternativ kann der Begriff "Ausschalten", "Deaktivieren" oder "Stoppen" synonym für den Begriff "Sperren" verwendet werden. Weiter zusätzlich oder alternativ kann das Sperren ein Sperren eines Betriebs des Bearbeitungs-Systems und/oder des Fahr-Systems sein. Weiter zusätzlich oder alternativ können/kann das Bearbeitungs-System und/oder das Fahr-System zeitlich vor dem Sperren freigegebenen sein.

In einer Weiterbildung der Erfindung weist das Verfahren, insbesondere der Schritt a), auf: Erfassen einer Abfolge-Zeitdauer für mindestens einen Teil der Abfolge von Betätigungen. Die vorgegebene Abfolge hat bzw. weist für mindestens einen Teil der Betätigungen eine Minimal-Abfolge-Zeitdauer und/oder eine, insbesondere gegenüber der Minimal-Abfolge-Zeitdauer größere, Maximal-Abfolge-Zeitdauer auf. Dies ermöglicht eine Kontrolle einer Absicht der erfassten Abfolge von Betätigungen, insbesondere durch den Benutzer. Insbesondere kann das Erfassen automatisch sein. Zusätzlich oder alternativ kann das Erfassen ein Erfassen eines Werts der Abfolge-Zeitdauer sein. Weiter zusätzlich oder alternativ kann mindestens der Teil der Abfolge von Betätigungen mindestens 50 % (Prozent) der Abfolge von Betätigungen bedeuten und/oder für mindestens eine, insbesondere unabhängige, Handlung, insbesondere des Benutzers, charakteristisch sein. Weiter zusätzlich oder alternativ kann die vorgegebene Abfolge für mindestens den Teil der Betätigungen einen Wert der Minimal-Abfolge-Zeitdauer und/oder einen, insbesondere gegenüber dem Wert der Minimal-Abfolge-Zeitdauer größeren, Wert der Maximal-Abfolge-Zeitdauer aufweisen.

In einer Weiterbildung der Erfindung ist die vorgegebene Abfolge für zwei voneinander unabhängige, insbesondere vollständig unterschiedliche, Handlungen eines, insbesondere des, Benutzers des Bearbeitungsgeräts charakteristisch. Insbesondere definiert bzw. weist die vorgegebene Abfolge gleichzeitige Betätigungen der Bediensensoreinrichtung an, insbesondere mindestens, zwei Erfassungspositionen der Mehrzahl von Erfassungspositionen auf. Die zwei Erfassungspositionen sind derart entfernt voneinander, dass die Bediensensoreinrichtung an den zwei Erfassungspositionen nicht durch, insbesondere nur, eine, insbesondere einzige, Hand des Benutzers gleichzeitig betätigbar ist. Dies ermöglicht eine Kontrolle einer Absicht der erfassten Abfolge von Betätigungen, insbesondere durch den Benutzer. Insbesondere ermöglicht dies eine Kontrolle einer Anwesenheit beider Hände des Benutzers an der Bediensensoreinrichtung, und/oder eine Vermeidung einer Anwesenheit einer der Hände z.B. an dem Bearbeitungswerkzeug bei dem Freigeben. Insbesondere kann der Begriff "getrennt" synonym für den Begriff "unabhängig" verwendet werden. Zusätzlich oder alternativ kann der Begriff "Bewegung" synonym für den Begriff "Handlung" verwendet werden. Weiter zusätzlich oder alternativ können die zwei Erfassungspositionen eine doppelte Handbreite einer Durchschnitts-Erwachsenen-Hand voneinander entfernt sein, z.B. minimal 5 cm (Zentimeter), insbesondere minimal 7,5 cm, und/oder maximal 150 cm, insbesondere maximal 100 cm.

In einer Weiterbildung der Erfindung weist die Bediensensoreinrichtung eine Mehrzahl von benutzerbetätigbaren, insbesondere kapazitiven und/oder resistiven, Bediensensoren auf. Die Bediensensoren definieren bzw. weisen die Erfassungspositionen auf. Der Schritt a) weist auf: Erfassen der Abfolge aufweisend Betätigungen verschiedener Bediensensoren der Mehrzahl von Bediensensoren. Der Schritt b) weist auf: falls die erfasste Abfolge der vorgegebenen Abfolge entspricht, Kalibrieren mindestens eines Bediensensors der Mehrzahl von Bediensensoren. Insbesondere können die Bediensensoren elektrisch sein. Zusätzlich oder alternativ können die Bediensensoren räumlich verteilt, insbesondere angeordnet, sein. Weiter zusätzlich oder alternativ kann die vorgegebene Abfolge Betätigungen verschiedener Bediensensoren der Mehrzahl von Bediensensoren aufweisen bzw. definieren. Weiter zusätzlich oder alternativ kann das Kalibrieren ein Kalibrieren mindestens eines Werts mindestens des Bediensensors sein. Weiter zusätzlich oder alternativ kann mindestens der Bediensensor zeitlich vor dem Kalibrieren unkalibriert sein.

In einer Weiterbildung der Erfindung weist das Bearbeitungsgerät einen Handgriff, insbesondere einen Führungsholm, auf. Die Bediensensoreinrichtung erstreckt sich entlang des Handgriffs. Insbesondere sind die Erfassungspositionen entlang des Handgriffs, insbesondere angeordnet. Insbesondere kann der Begriff "Bediengriff" synonym für den Begriff "Handgriff" verwendet werden. Zusätzlich oder alternativ kann der Begriff "Lenker" synonym für den Begriff "Führungsholm" verwendet werden. Weiter zusätzlich oder alternativ kann die Bediensensoreinrichtung an dem Handgriff angeordnet, insbesondere befestigt, sein.

In einer Weiterbildung der Erfindung weist der Schritt b) auf: Kalibrieren der Bediensensoreinrichtung für mindestens eine Erfassungsposition der Mehrzahl von Erfassungspositionen, wobei keine Betätigung der Bediensensoreinrichtung an der Erfassungsposition erfasst, insbesondere worden, ist, insbesondere in dem Schritt a), mittels Interpolation. Dies ermöglicht ein Kalibrieren der Bediensensoreinrichtung für alle Erfassungspositionen.

In einer Weiterbildung der Erfindung weist das Bearbeitungsgerät eine weitere, insbesondere verschiedenartige, benutzerbetätigbare Bediensensoreinrichtung, insbesondere eine Kraftsensoreinrichtung, auf. Insbesondere sind die Bediensensoreinrichtung und die weitere Bediensensoreinrichtung derart nah zueinander, insbesondere angeordnet, insbesondere ineinander integriert, dass die Bediensensoreinrichtung und die weitere Bediensensoreinrichtung durch eine Hand des Benutzers gleichzeitig betätigbar sind. Das Verfahren weist den Schritt auf: falls die erfasste Abfolge der vorgegebenen Abfolge entspricht, insbesondere gleicht, Freigeben eines Kalibrierens der weiteren Bediensensoreinrichtung. Dies ermöglicht ein Auslösen des Freigebens des Kalibrierens der weiteren Bediensensoreinrichtung durch ein Betätigen der Bediensensoreinrichtung. Dies ermöglicht einen Synergieeffekt. Insbesondere kann die weitere Bediensensoreinrichtung elektrisch sein. Zusätzlich oder alternativ können die Bediensensoreinrichtung und die weitere Bediensensoreinrichtung mindestens teilweise, insbesondere vollständig, auf- bzw. übereinander, insbesondere angeordnet, sein. Weiter zusätzlich oder alternativ kann das Freigeben automatisch sein. Weiter zusätzlich oder alternativ kann das Kalibrieren ein Kalibrieren mindestens eines Werts der weiteren Bediensensoreinrichtung sein. Weiter zusätzlich oder alternativ kann die weitere Bediensensoreinrichtung zeitlich vor dem Freigeben und/oder dem Kalibrieren unkalibriert sein. Weiter zusätzlich oder alternativ kann das Verfahren aufweisen: insbesondere entweder, Steuern des Bearbeitungs-Systems als Funktion mindestens einer Betätigung der kalibrierten Bediensensoreinrichtung und Steuern des Fahr-Systems als Funktion mindestens einer Betätigung der kalibrierten weiteren Bediensensoreinrichtung, oder Steuern des Bearbeitungs-Systems als Funktion mindestens einer Betätigung der kalibrierten weiteren Bediensensoreinrichtung und Steuern des Fahr-Systems als Funktion mindestens einer Betätigung der kalibrierten Bediensensoreinrichtung.

Das erfindungsgemäße Bearbeitungssystem weist ein handgeführtes, insbesondere das handgeführte, Bearbeitungsgerät auf. Das Bearbeitungsgerät weist eine, insbesondere die, benutzerbetätigbare Bediensensoreinrichtung auf. Die Bediensensoreinrichtung weist eine, insbesondere die, Mehrzahl von, insbesondere den, verschiedenen Erfassungspositionen auf. Das Bearbeitungssystem, insbesondere das Bearbeitungsgerät, ist zum, insbesondere zu dem, Erfassen einer, insbesondere der, Abfolge von, insbesondere den, Betätigungen der Bediensensoreinrichtung an, insbesondere den, verschiedenen Erfassungspositionen der Mehrzahl von Erfassungspositionen ausgebildet. Des Weiteren ist das Bearbeitungssystem, insbesondere das Bearbeitungsgerät, falls die erfasste Abfolge einer, insbesondere der, vorgegebenen Abfolge entspricht, zum, insbesondere zu dem, Kalibrieren der Bediensensoreinrichtung für mindestens eine, insbesondere die, Erfassungsposition der Mehrzahl von Erfassungspositionen basierend auf mindestens einer, insbesondere der, der Betätigungen der erfassten Betätigungen ausgebildet. Das Bearbeitungssystem ermöglicht den/die Vorteil/e wie für das Verfahren vorhergehend genannt. Insbesondere kann das Bearbeitungssystem, insbesondere das Bearbeitungsgerät, zum Ausführen eines, insbesondere des, Verfahrens wie vorhergehend genannt ausgebildet sein. Zusätzlich oder alternativ kann das Bearbeitungsgerät mindestens teilweise, insbesondere vollständig, wie für das Verfahren vorhergehend genannt ausgebildet sein. Weiter zusätzlich oder alternativ kann das Bearbeitungssystem elektrisch sein.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: eine Perspektivansicht eines erfindungsgemäßen Bearbeitungssystems aufweisend ein handgeführtes Bearbeitungsgerät und eines erfindungsgemäßen Verfahrens zum Betreiben des handgeführten Bearbeitungsgeräts,
- Fig. 2: eine Explosionsansicht einer benutzerbetätigbaren Bediensensoreinrichtung, einer weiteren benutzerbetätigbaren Bediensensoreinrichtung und eines Handgriffs des Bearbeitungsgeräts der Fig. 1,
- Fig. 3: ein Erfassen einer Abfolge von Betätigungen der Bediensensoreinrichtung der Fig. 2 des Verfahrens der Fig. 1,
- Fig. 4: ein Kalibrieren der Bediensensoreinrichtung der Fig. 2 des Verfahrens der Fig. 1, und
- Fig. 5: ein Steuern des Bearbeitungsgeräts der Fig. 1 als Funktion mindestens einer Betätigung der kalibrierten Bediensensoreinrichtung der Fig. 2 des Verfahrens der Fig. 1.

### DETAILLIERTE BESCHREIBUNG DER AUSFÜHRUNGSBEISPIELE

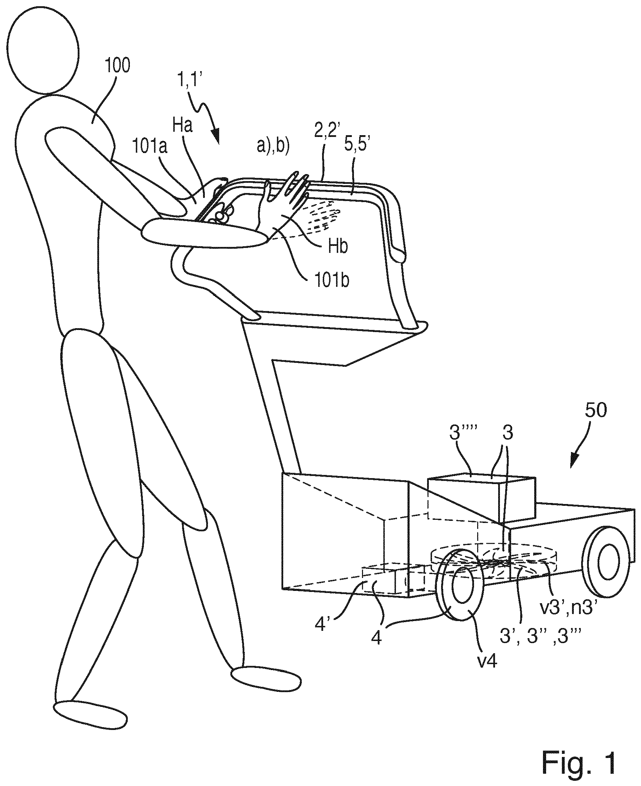

Fig. 1 zeigt ein erfindungsgemäßes Bearbeitungssystem 50. Das Bearbeitungssystem 50 weist ein handgeführtes Bearbeitungsgerät 1 auf.

Fig. 1 und 3 bis 5 zeigen ein erfindungsgemäßes Verfahren zum Betreiben des handgeführten Bearbeitungsgeräts 1.

Das Bearbeitungsgerät 1 weist eine benutzerbetätigbare Bediensensoreinrichtung 2 auf, wie in Fig. 1, 2 und 5 gezeigt. Die Bediensensoreinrichtung 2 weist eine Mehrzahl von verschiedenen Erfassungspositionen POa-x auf.

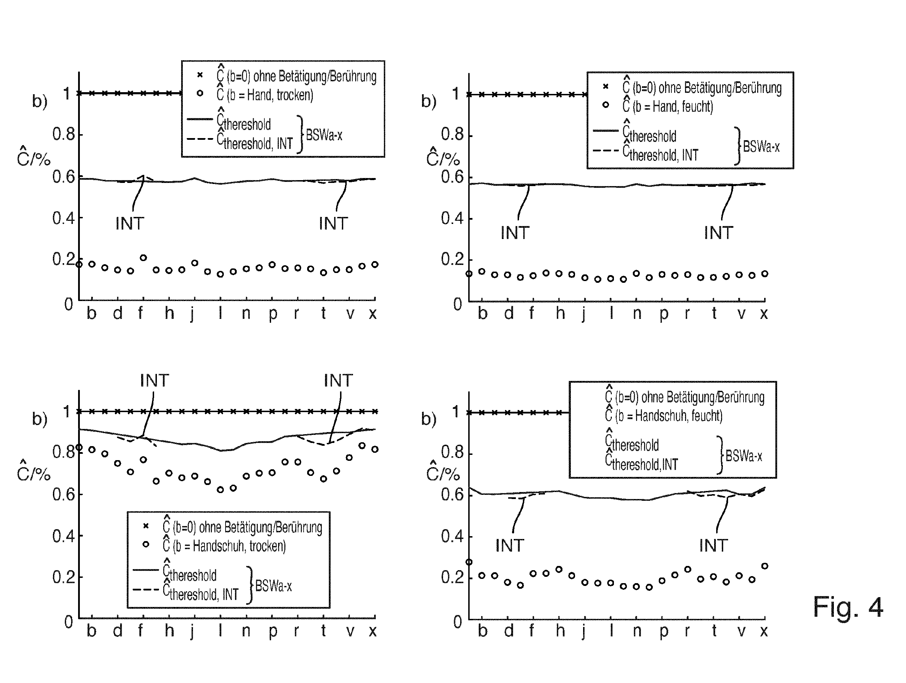

Das Bearbeitungssystem 50 ist zum Erfassen einer Abfolge eAB von Betätigungen Ba-c, Bg-q der Bediensensoreinrichtung 2, insbesondere durch einen Benutzer 100 des Bearbeitungsgeräts 1, an verschiedenen Erfassungspositionen POa-c, Pog-q der Mehrzahl von Erfassungspositionen POa-x ausgebildet, insbesondere erfasst. Des Weiteren ist das Bearbeitungssystem 50, falls die erfasste Abfolge eAB einer vorgegebenen Abfolge vAB entspricht, zum Kalibrieren der Bediensensoreinrichtung 2 für mindestens eine Erfassungsposition POa-x der Mehrzahl von Erfassungspositionen POa-x basierend auf mindestens einer der Betätigungen Ba-c, Bg-q der erfassten Betätigungen Ba-c, Bg-q ausgebildet, insbesondere kalibriert, wie in Fig. 4 gezeigt.

Außerdem weist das Verfahren die Schritte auf: a) Erfassen der Abfolge eAB von den Betätigungen Ba-c, Bg-q der Bediensensoreinrichtung 2 an den verschiedenen Erfassungspositionen POa-c, Pog-q der Mehrzahl von Erfassungspositionen POa-x, insbesondere mittels des Bearbeitungssystems 50. b) falls die erfasste Abfolge eAB der vorgegebenen Abfolge vAB entspricht, Kalibrieren der Bediensensoreinrichtung 2 für mindestens die Erfassungsposition POa-x der Mehrzahl von Erfassungspositionen POa-x basierend auf mindestens der der Betätigungen Ba-c, Bg-q der erfassten Betätigungen Ba-c, Bg-q, insbesondere mittels des Bearbeitungssystems 50.

Im Detail ist die Bediensensoreinrichtung 2 als eine kapazitive und/oder resistive Bediensensoreinrichtung 2' ausgebildet, insbesondere aufweisend eine kapazitive Folie.

Weiter weist die Bediensensoreinrichtung 2 eine Mehrzahl von benutzerbetätigbaren, insbesondere kapazitiven und/oder resistiven, Bediensensoren 2a-x auf. Die Bediensensoren 2a-x weisen die Erfassungspositionen POa-x auf. Der Schritt a) weist auf: Erfassen der Abfolge eAB aufweisend Betätigungen Ba-c, Bg-q verschiedener Bediensensoren 2a-c, 2g-q der Mehrzahl von Bediensensoren 2a-x. Der Schritt b) weist auf: falls die erfasste Abfolge eAB der vorgegebenen Abfolge vAB entspricht, Kalibrieren mindestens eines Bediensensors 2a-x der Mehrzahl von Bediensensoren 2a-x.

In dem gezeigten Ausführungsbeispiel weist die Bediensensoreinrichtung 2 vierundzwanzig Erfassungspositionen POa-x und/oder vierundzwanzig bzw. eine entsprechende, insbesondere gleiche, Mehrzahl von Bediensensoren 2a-x auf. In alternativen Ausführungsbeispielen kann die Bediensensoreinrichtung mindestens zwei Erfassungspositionen und/oder mindestens zwei bzw. eine entsprechende, insbesondere gleiche, Mehrzahl von Bediensensoren aufweisen.

Zudem ist in dem gezeigten Ausführungsbeispiel das Bearbeitungsgerät 1 ein Rasenmäher 1', insbesondere ein Elektro- und/oder Akkurasenmäher, wie in Fig. 1 gezeigt. In alternativen Ausführungsbeispielen kann das Bearbeitungsgerät ein Vertikutierer, eine Grasschere, eine Kreiselschere, ein Freischneider, eine Heckenschere, ein Heckenschneider, ein Gehölzschneider, eine Säge, ein Trennschleifer, ein Hoch-Entaster, eine Astschere, ein Laubbläser, ein Blasgerät, ein Sauggerät, ein Laubsauger, ein Häckselgerät, ein Kehrgerät, eine Kehrwalze, eine Kehrbürste, ein Hochdruckreiniger oder ein Reinigungsgerät sein.

Zusätzlich weist in dem gezeigten Ausführungsbeispiel das Bearbeitungsgerät 1 ein Bearbeitungswerkzeug 3' auf. In dem gezeigten Ausführungsbeispiel weist das Bearbeitungswerkzeug 3' weist ein Messer 3", insbesondere ein Schneidmesser 3‴, auf. In alternativen Ausführungsbeispielen kann zusätzlich oder alternativ das Bearbeitungswerkzeug einen Faden, insbesondere einen Schneidfaden, ein Schneidblatt, ein Sägeblatt, eine Sägekette, eine Schleifkette, eine Schleifscheibe, ein Messerrad, ein Strömungslaufrad oder ein Fluid aufweisen.

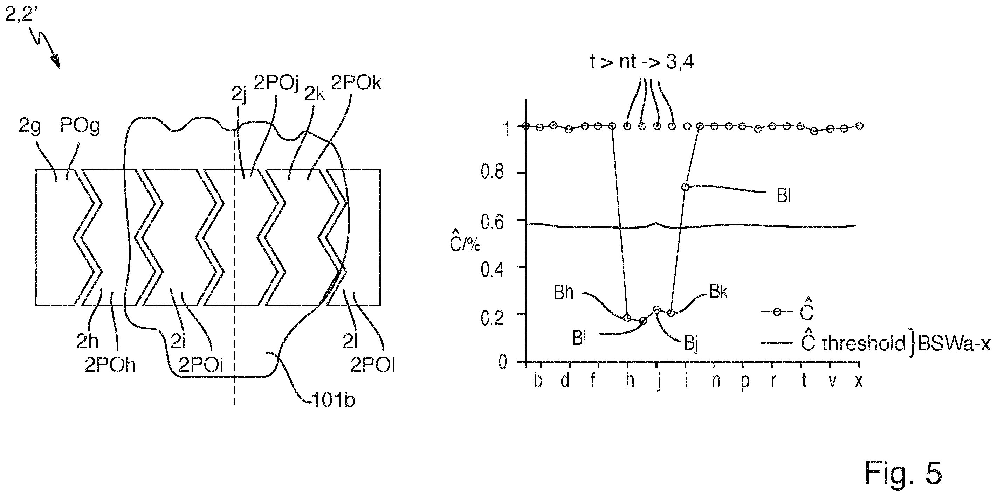

Des Weiteren weist in dem gezeigten Ausführungsbeispiel das Kalibrieren ein Festlegen mindestens eines Betätigungs-Schwellwerts BSWa-x, insbesondere zum Steuern des Bearbeitungsgeräts 1, auf, wie in Fig. 4 und 5 gezeigt.

Dies ermöglicht ein Steuern des Bearbeitungsgeräts 1 angepasst an eine Betätigung durch mindestens eine trockne Hand, wie in Fig. 4 oben links gezeigt, mindestens eine feuchte Hand, wie in Fig. 4 oben rechts gezeigt, mindestens eine Hand mit angezogenem trocknem Handschuh, wie in Fig. 4 unten links gezeigt, und/oder mindestens eine Hand mit angezogenem feuchtem Handschuh, wie in Fig. 4 unten rechts gezeigt.

Insbesondere zeigt Fig. 4 Kapazitäten ohne Betätigung/Berührung, insbesondere mit dem Wert eins, prozentuale Abnahmen der Kapazitäten bei Betätigung/Berührung und mindestens den festgelegten Betätigungs-Schwellwert BSWa-x.

Außerdem weist das Bearbeitungsgerät 1 ein Bearbeitungs-System 3, insbesondere aufweisend das bewegliche Bearbeitungswerkzeug 3', und/oder ein Fahr-System 4 auf, wie in Fig. 1 gezeigt.

Zusätzlich weist das Verfahren den Schritt auf: Steuern des Bearbeitungs-Systems 3, insbesondere variables Einstellen einer Bewegungsgeschwindigkeit und/oder -drehzahl v3', n3' des Bearbeitungswerkzeugs 3', und/oder des Fahr-Systems 4, insbesondere variables Einstellen einer Fahrgeschwindigkeit v4, als Funktion mindestens einer Betätigung Bh-k, insbesondere erreichend und/oder überschreitend mindestens den festgelegten Betätigungs-Schwellwert BSWa-x, der kalibrierten Bediensensoreinrichtung 2, insbesondere mittels des Bearbeitungssystems 50, wie in Fig. 5 gezeigt.

Insbesondere ist mindestens die Betätigung Bh-k durch mindestens eine Hand 101b des Benutzers 100.

Weiter zusätzlich weist das Verfahren den Schritt auf: falls die erfasste Abfolge eAB der vorgegebenen Abfolge vAB entspricht, Freigeben des Bearbeitungs-Systems 3, insbesondere eines Bearbeitungs-Antriebs-Systems 3ʺʺ des Bearbeitungs-Systems 3, insbesondere zur Bewegung des Bearbeitungswerkzeugs 3', und/oder des Fahr-Systems 4, insbesondere eines Fahr-Antriebs-Systems 4' des Fahr-Systems 4, insbesondere mittels des Bearbeitungssystems 50, wie in Fig. 1 gezeigt.

Insbesondere weisen/weist das Bearbeitungs-Antriebs-System 3ʺʺ und/oder das Fahr-Antriebs-System 4', insbesondere jeweils, einen Antriebsmotor und/oder einen, insbesondere zwischengeschalteten, Kupplungs-/Bremsmechanismus auf.

Zusätzlich oder alternativ weist das Fahr-System 4 mindestens ein, insbesondere angetriebenes Rad, insbesondere zwei Räder, insbesondere und mindestens ein, insbesondere nicht-angetriebenes Rad, insbesondere zwei Räder, auf.

Zudem weist das Verfahren den Schritt auf: falls keine Betätigung der Bediensensoreinrichtung 2 erfasst wird, insbesondere und seitdem eine vorgegebene Nicht-Betätigungs-Zeitdauer nt abgelaufen ist, Sperren des Bearbeitungs-Systems 3 und/oder des Fahr-Systems 4, insbesondere mittels des Bearbeitungssystems 50, wie in Fig. 5 gezeigt.

Insbesondere bedeutet dies, insbesondere das in Fig. 4 Gezeigte, dass im Falle des Freigebens, insbesondere und des Steuerns, des Bearbeitungs-Systems 3 und/oder des Fahr-Systems 4 durch mindestens eine Hand mit angezogenem feuchtem Handschuh bei Trocknung keine Betätigung der Bediensensoreinrichtung 2 erfasst wird und somit das Bearbeitungs-System 3 und/oder das Fahr-System 4 gesperrt werden/wird. Dann muss neu kalibriert, insbesondere und freigegebenen und gesteuert, werden.

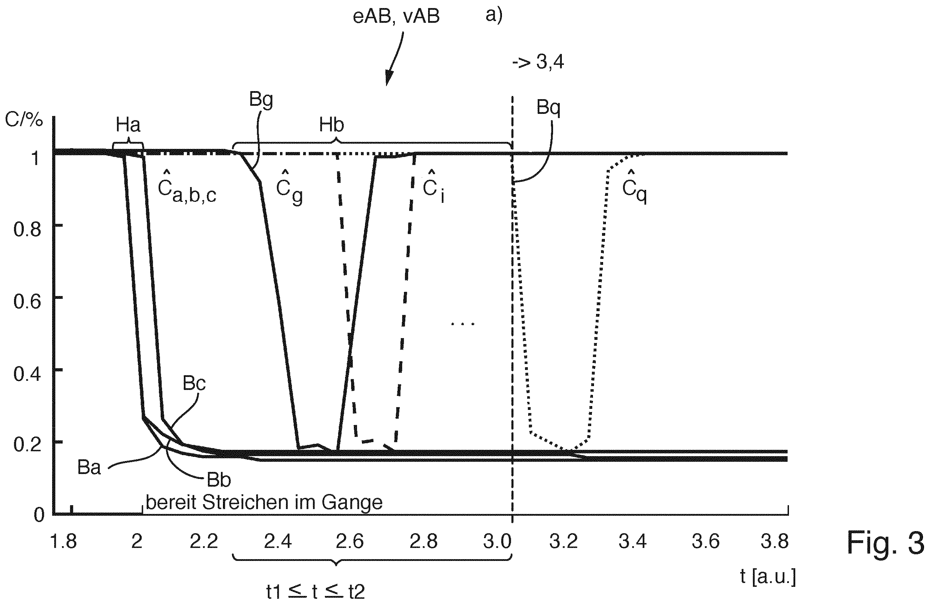

Des Weiteren weist das Verfahren, insbesondere der Schritt a), auf: Erfassen einer Abfolge-Zeitdauer t für mindestens einen Teil Bg-q der Abfolge eAB von Betätigungen Ba-c, Bg-q, insbesondere mittels des Bearbeitungssystems 50, wie in Fig. 3 gezeigt. Die vorgegebene Abfolge vAB weist für mindestens einen Teil Bg-q der Betätigungen Ba-c, Bg-q eine Minimal-Abfolge-Zeitdauer t1, wie z.B. 100 ms (Millisekunden), insbesondere 200 ms, und/oder eine, insbesondere gegenüber der Minimal-Abfolge-Zeitdauer t1 größere, Maximal-Abfolge-Zeitdauer t2, wie z.B. 1600 ms, insbesondere 800 ms, auf.

Außerdem ist die vorgegebene Abfolge vAB für zwei voneinander unabhängige, insbesondere vollständig unterschiedliche, Handlungen Ha, Hb des Benutzers 100 des Bearbeitungsgeräts 1 charakteristisch, wie in Fig. 1 und 3 gezeigt. Insbesondere weist die vorgegebene Abfolge vAB gleichzeitige Betätigungen Ba-c, Bg-q der Bediensensoreinrichtung 2 an zwei Erfassungspositionen POa-c, POg-q der Mehrzahl von Erfassungspositionen POa-x auf. Die zwei Erfassungspositionen POa-c, POg-q sind derart entfernt voneinander, dass die Bediensensoreinrichtung 2 an den zwei Erfassungspositionen POa-c, POg-q nicht durch eine Hand 101a, 101b des Benutzers 100 gleichzeitig betätigbar ist.

In dem gezeigten Ausführungsbeispiel ist die Handlung Ha die Betätigung Ba-c der Bediensensoreinrichtung 2 an mindestens der Erfassungsposition POa-c, insbesondere dass eine, insbesondere linke, Hand 101a des Benutzers 100 an mindestens der Erfassungsposition POa-c bleiben muss. Die Handlung Hb ist die Betätigung Bg-q der Bediensensoreinrichtung 2 an mindestens der Erfassungsposition POg-q, insbesondere dass eine, insbesondere rechte, Hand 101b des Benutzers 100 an den Erfassungspositionen POg-q entlang streichen muss.

Weiter ist der Teil Bg-q der Abfolge eAB von Betätigungen Ba-c, Bg-q die Betätigung Bg-q der Bediensensoreinrichtung 2 an mindestens der Erfassungsposition POg-q und/oder für die Handlung Hb charakteristisch, insbesondere das Streichen durch die, insbesondere rechte, Hand 101b an den Erfassungspositionen POg-q entlang.

Insbesondere liegen am Anfang alle Kapazitätswerte bei 1. Zuerst wird die Bediensensoreinrichtung 2 an mindestens der Erfassungsposition POa-c betätigt. Somit ergibt sich ein Einbruch mindestens des Kapazitätswerts an mindestens der Erfassungsposition POa-c. Ab dann wird auf die Ausführung des Streichens an den Erfassungspositionen POg-q entlang gewartet. Sowie ein Abfall des Kapazitätswertes Cg der Erfassungsposition POg erfolgt, ist klar, dass das Steichen im Gange ist bzw. das Erfassen der Abfolge-Zeitdauer t für mindestens den Teil Bg-q der Abfolge eAB von Betätigungen Ba-c, Bg-q wird ausgeführt bzw. angefangen bzw. gestartet. Ein Index der Erfassungsposition wird um eins erhöht. Dieser Vorgang wiederholt sich so lange, bis die letzte Erfassungsposition POq erreicht ist. Sowie ein Kapazitätseinbruch an dieser Erfassungsposition POq erfolgt, wird das Erfassen der Abfolge-Zeitdauer t für mindestens den Teil Bg-q der Abfolge eAB von Betätigungen Ba-c, Bg-q beendet bzw. gestoppt. Somit ergibt sich die Abfolge-Zeitdauer t.

Zusätzlich oder alternativ weist das Erfassen, insbesondere der Abfolge, der Betätigungen ein Erfassen bzw. ein Erkennen eines Abfallens eines Kapazitätswerts auf.

Zudem weist das Bearbeitungsgerät 1 einen Handgriff 5, insbesondere einen Führungsholm 5', auf. Die Bediensensoreinrichtung 2 erstreckt sich entlang des Handgriffs 5. Insbesondere sind die Erfassungspositionen POa-x entlang des Handgriffs 5, insbesondere entfernt voneinander.

Des Weiteren weist der Schritt b) auf: Kalibrieren der Bediensensoreinrichtung 2 für mindestens eine Erfassungsposition POd-f, POr-x der Mehrzahl von Erfassungspositionen POa-x, wobei keine Betätigung der Bediensensoreinrichtung 2 an der Erfassungsposition POd-f, POr-x erfasst ist, mittels Interpolation INT, wie in Fig. 4 gezeigt, insbesondere mittels des Bearbeitungssystems 50.

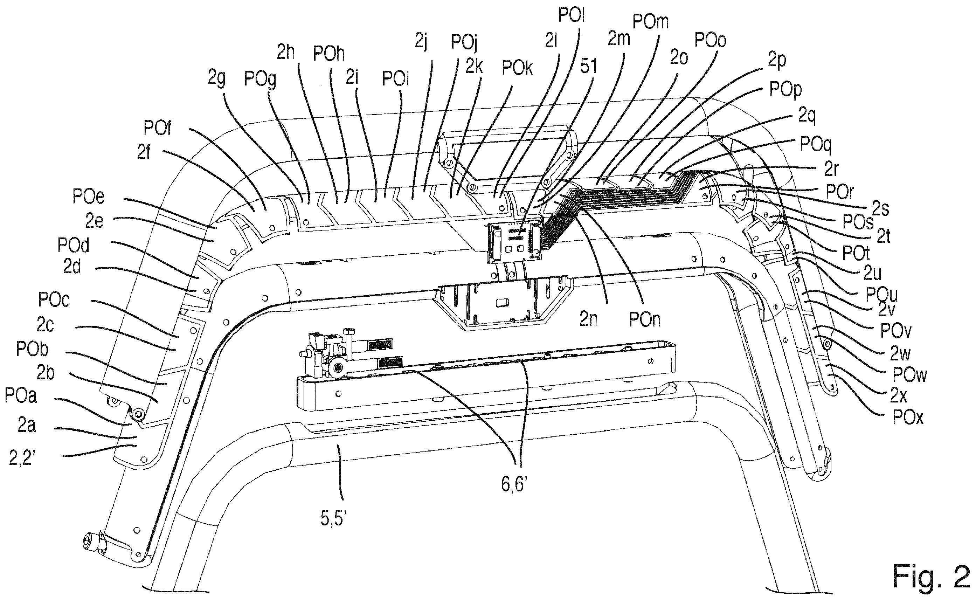

Außerdem weist das Bearbeitungsgerät 1 eine weitere, insbesondere verschiedenartige, benutzerbetätigbare Bediensensoreinrichtung 6, insbesondere eine Kraftsensoreinrichtung 6', insbesondere aufweisend eine kraftresistive Folie, auf, wie in Fig. 2 gezeigt. Insbesondere sind die Bediensensoreinrichtung 2 und die weitere Bediensensoreinrichtung 6 derart nah zueinander, insbesondere ineinander integriert, dass die Bediensensoreinrichtung 2 und die weitere Bediensensoreinrichtung 6 durch eine, insbesondere die, Hand 101b des Benutzers 100 gleichzeitig betätigbar sind. Das Verfahren weist den Schritt auf: falls die erfasste Abfolge eAB der vorgegebenen Abfolge vAB entspricht, Freigeben eines Kalibrierens der weiteren Bediensensoreinrichtung 6, insbesondere mittels des Bearbeitungssystems 50.

Im Übrigen weist in dem gezeigten Ausführungsbeispiel das Bearbeitungssystem 50, insbesondere das Bearbeitungsgerät 1, eine Kontrolleinrichtung, insbesondere eine Rechen-und/oder Speichereinrichtung, bzw. Elektronik 51 zum Ausführen des Verfahrens wie vorhergehend genannt auf, insbesondere zum Speichern der erfassten Betätigungen, zum Kalibrieren und/oder zum Speichern der Kalibrierung, insbesondere mindestens des festgelegten Betätigungs-Schwellwert BSWa-x.

Im Detail sind/ist die Bediensensoreinrichtung 2 und/oder die weitere Bediensensoreinrichtung 6 und/oder die Elektronik 51 an dem Handgriff 5 angeordnet, insbesondere in den Handgriff 5, insbesondere seine Griffschale, integriert. Insbesondere ist die Bediensensoreinrichtung 2, insbesondere die kapazitive Folie, zwischen eine Griffoberschale und eine Griffunterschale des Handgriffs 5 eingelegt. Zusätzlich oder alternativ ist die Bediensensoreinrichtung 2 an die Elektronik 51 angeschlossen. Dies, insbesondere die modulare Bauweise mit der getrennten Ausführung der Bediensensoreinrichtung 2 und der weiteren Bediensensoreinrichtung 6, insbesondere der Kraftsensoreinrichtung 6', ermöglicht es, die weitere Bediensensoreinrichtung 6 als optionale Funktion anzubieten. Zusätzlich oder alternativ ermöglicht dies, insbesondere die Versenkung der Bediensensoreinrichtung 2 und/oder der weiteren Bediensensoreinrichtung 6 und/oder der Elektronik 51 in dem Handgriff 5, diese vor mindestens einem äußeren Umwelteinfluss, wie z.B. Regen und/oder Schmutz, zu schützen.

Weiter ist das Erfassen, insbesondere der Abfolge, der Betätigungen möglich, sobald das Bearbeitungsgerät 1 aufgeweckt und/oder mit einer, insbesondere elektrischen, Antriebsleistung, insbesondere von einem Akkupack, insbesondere elektrisch, versorgt ist.

Wie die gezeigten und zuvor beschriebenen Ausführungsbeispiele deutlich machen, stellt die Erfindung ein vorteilhaftes Verfahren zum Betreiben eines handgeführten Bearbeitungsgeräts und ein vorteilhaftes Bearbeitungssystem aufweisend ein handgeführtes Bearbeitungsgerät bereit, das jeweils verbesserte Eigenschaften aufweist.

## Patentansprüche

1. Verfahren zum Betreiben eines handgeführten Bearbeitungsgeräts (1),
- wobei das Bearbeitungsgerät (1) eine benutzerbetätigbare Bediensensoreinrichtung (2) aufweist, wobei die Bediensensoreinrichtung (2) eine Mehrzahl von verschiedenen Erfassungspositionen (POa-x) aufweist,
- wobei das Verfahren die Schritte aufweist:
a) Erfassen einer Abfolge (eAB) von Betätigungen (Ba-c, Bg-q) der Bediensensoreinrichtung (2) an verschiedenen Erfassungspositionen (POa-c, Pog-q) der Mehrzahl von Erfassungspositionen (POa-x), und
b) , falls die erfasste Abfolge (eAB) einer vorgegebenen Abfolge (vAB) entspricht, Kalibrieren der Bediensensoreinrichtung (2) für mindestens eine Erfassungsposition (POa-x) der Mehrzahl von Erfassungspositionen (POa-x) basierend auf mindestens einer der Betätigungen (Ba-c, Bg-q) der erfassten Betätigungen (Ba-c, Bg-q),
- wobei die Bediensensoreinrichtung (2) als eine kapazitive und/oder resistive Bediensensoreinrichtung (2') ausgebildet ist, wobei die eine kapazitive und/oder resistive Bediensensoreinrichtung berührungsempfindlich ist, wobei die Betätigungen Berührungen aufweisen.

2. Verfahren nach Anspruch 1,
- wobei das Bearbeitungsgerät (1) ein Rasenmäher (1'), ein Vertikutierer, eine Grasschere, eine Kreiselschere, ein Freischneider, eine Heckenschere, ein Heckenschneider, ein Gehölzschneider, eine Säge, ein Trennschleifer, ein Hoch-Entaster, eine Astschere, ein Laubbläser, ein Blasgerät, ein Sauggerät, ein Laubsauger, ein Häckselgerät, ein Kehrgerät, eine Kehrwalze, eine Kehrbürste, ein Hochdruckreiniger oder ein Reinigungsgerät ist, und/oder
- wobei das Bearbeitungsgerät (1) ein Bearbeitungswerkzeug (3') aufweist, wobei das Bearbeitungswerkzeug (3') einen Faden, insbesondere einen Schneidfaden, ein Messer (3"), insbesondere ein Schneidmesser (3‴), ein Schneidblatt, ein Sägeblatt, eine Sägekette, eine Schleifkette, eine Schleifscheibe, ein Messerrad, ein Strömungslaufrad oder ein Fluid aufweist, insbesondere ist.

3. Verfahren nach einem der vorhergehenden Ansprüche,
- wobei das Kalibrieren ein Festlegen mindestens eines Betätigungs-Schwellwerts (BSWa-x), insbesondere zum Steuern des Bearbeitungsgeräts (1), aufweist.

4. Verfahren nach einem der vorhergehenden Ansprüche,
- wobei das Bearbeitungsgerät (1) ein Bearbeitungs-System (3), insbesondere aufweisend ein bewegliches Bearbeitungswerkzeug (3'), und/oder ein Fahr-System (4) aufweist,
- wobei das Verfahren den Schritt aufweist: Steuern des Bearbeitungs-Systems (3), insbesondere variables Einstellen einer Bewegungsgeschwindigkeit und/oder -drehzahl (v3', n3') des Bearbeitungswerkzeugs (3'), und/oder des Fahr-Systems (4), insbesondere variables Einstellen einer Fahrgeschwindigkeit (v4), als Funktion mindestens einer Betätigung (Bh-k) der kalibrierten Bediensensoreinrichtung (2).

5. Verfahren nach einem der vorhergehenden Ansprüche,
- wobei das Bearbeitungsgerät (1) ein/das Bearbeitungs-System (3), insbesondere aufweisend ein/das bewegliche Bearbeitungswerkzeug (3'), und/oder ein/das Fahr-System (4) aufweist,
- wobei das Verfahren den Schritt aufweist: falls die erfasste Abfolge (eAB) der vorgegebenen Abfolge (vAB) entspricht, Freigeben des Bearbeitungs-Systems (3), insbesondere eines Bearbeitungs-Antriebs-Systems (3ʺʺ) des Bearbeitungs-Systems (3), insbesondere zur Bewegung des Bearbeitungswerkzeugs (3'), und/oder des Fahr-Systems (4), insbesondere eines Fahr-Antriebs-Systems (4') des Fahr-Systems (4).

6. Verfahren nach Anspruch 5,
- wobei das Verfahren den Schritt aufweist: falls keine Betätigung der Bediensensoreinrichtung (2) erfasst wird, insbesondere und seitdem eine vorgegebene Nicht-Betätigungs-Zeitdauer (nt) abgelaufen ist, Sperren des Bearbeitungs-Systems (3) und/oder des Fahr-Systems (4).

7. Verfahren nach einem der vorhergehenden Ansprüche,
- wobei das Verfahren, insbesondere der Schritt a), aufweist: Erfassen einer Abfolge-Zeitdauer (t) für mindestens einen Teil (Bg-q) der Abfolge (eAB) von Betätigungen (Ba-c, Bg-q), und
- wobei die vorgegebene Abfolge (vAB) für mindestens einen Teil (Bg-q) der Betätigungen (Ba-c, Bg-q) eine Minimal-Abfolge-Zeitdauer (t1) und/oder eine, insbesondere gegenüber der Minimal-Abfolge-Zeitdauer (t1) größere, Maximal-Abfolge-Zeitdauer (t2) aufweist.

8. Verfahren nach einem der vorhergehenden Ansprüche,
- wobei die vorgegebene Abfolge (vAB) für zwei voneinander unabhängige, insbesondere vollständig unterschiedliche, Handlungen (Ha, Hb) eines Benutzers (100) des Bearbeitungsgeräts (1) charakteristisch ist, insbesondere wobei die vorgegebene Abfolge (vAB) gleichzeitige Betätigungen (Ba-c, Bg-q) der Bediensensoreinrichtung (2) an zwei Erfassungspositionen (POa-c, POg-q) der Mehrzahl von Erfassungspositionen (POa-x) aufweist, wobei die zwei Erfassungspositionen (POa-c, Pog-q) derart entfernt voneinander sind, dass die Bediensensoreinrichtung (2) an den zwei Erfassungspositionen (POa-c, POg-q) nicht durch eine Hand (101a, 101b) des Benutzers (100) gleichzeitig betätigbar ist.

9. Verfahren nach einem der vorhergehenden Ansprüche,
- wobei die Bediensensoreinrichtung (2) eine Mehrzahl von benutzerbetätigbaren, insbesondere kapazitiven und/oder resistiven, Bediensensoren (2a-x) aufweist, wobei die Bediensensoren (2a-x) die Erfassungspositionen (POa-x) aufweisen,
- wobei der Schritt a) aufweist: Erfassen der Abfolge (eAB) aufweisend Betätigungen (Bac, Bg-q) verschiedener Bediensensoren (2a-c, 2g-q) der Mehrzahl von Bediensensoren (2a-x), und
- wobei der Schritt b) aufweist: falls die erfasste Abfolge (eAB) der vorgegebenen Abfolge (vAB) entspricht, Kalibrieren mindestens eines Bediensensors (2a-x) der Mehrzahl von Bediensensoren (2a-x).

10. Verfahren nach einem der vorhergehenden Ansprüche,
- wobei das Bearbeitungsgerät (1) einen Handgriff (5), insbesondere einen Führungsholm (5'), aufweist, wobei die Bediensensoreinrichtung (2) sich entlang des Handgriffs (5) erstreckt, insbesondere wobei die Erfassungspositionen (POa-x) entlang des Handgriffs (5) sind.

11. Verfahren nach einem der vorhergehenden Ansprüche,
- wobei der Schritt b) aufweist: Kalibrieren der Bediensensoreinrichtung (2) für mindestens eine Erfassungsposition (POd-f, POr-x) der Mehrzahl von Erfassungspositionen (POa-x), wobei keine Betätigung der Bediensensoreinrichtung (2) an der Erfassungsposition (POd-f, POr-x) erfasst ist, mittels Interpolation (INT).

12. Verfahren nach einem der vorhergehenden Ansprüche,
- wobei das Bearbeitungsgerät (1) eine weitere, insbesondere verschiedenartige, benutzerbetätigbare Bediensensoreinrichtung (6), insbesondere eine Kraftsensoreinrichtung (6'), aufweist, insbesondere wobei die Bediensensoreinrichtung (2) und die weitere Bediensensoreinrichtung (6) derart nah zueinander, insbesondere ineinander integriert, sind, dass die Bediensensoreinrichtung (2) und die weitere Bediensensoreinrichtung (6) durch eine Hand (101b) des Benutzers (100) gleichzeitig betätigbar sind,
- wobei das Verfahren den Schritt aufweist: falls die erfasste Abfolge (eAB) der vorgegebenen Abfolge (vAB) entspricht, Freigeben eines Kalibrierens der weiteren Bediensensoreinrichtung (6).

13. Bearbeitungssystem (50), insbesondere zum Ausführen eines Verfahrens nach einem der vorhergehenden Ansprüche, wobei das Bearbeitungssystem (50) aufweist:
- ein handgeführtes Bearbeitungsgerät (1),
- wobei das Bearbeitungsgerät (1) eine benutzerbetätigbare Bediensensoreinrichtung (2) aufweist, wobei die Bediensensoreinrichtung (2) eine Mehrzahl von verschiedenen Erfassungspositionen (POa-x) aufweist, und
- wobei das Bearbeitungssystem (50) dazu ausgebildet ist:
- zum Erfassen einer Abfolge (eAB) von Betätigungen (Ba-c, Bg-q) der Bediensensoreinrichtung (2) an verschiedenen Erfassungspositionen (POa-c, Pog-q) der Mehrzahl von Erfassungspositionen (POa-x), und
- , falls die erfasste Abfolge (eAB) einer vorgegebenen Abfolge (vAB) entspricht, zum Kalibrieren der Bediensensoreinrichtung (2) für mindestens eine Erfassungsposition (POa-x) der Mehrzahl von Erfassungspositionen (POa-x) basierend auf mindestens einer der Betätigungen (Ba-c, Bg-q) der erfassten Betätigungen (Ba-c, Bg-q),
- wobei die Bediensensoreinrichtung (2) als eine kapazitive und/oder resistive Bediensensoreinrichtung (2') ausgebildet ist, wobei die eine kapazitive und/oder resistive Bediensensoreinrichtung berührungsempfindlich ist, wobei die Betätigungen Berührungen aufweisen.

## Claims

1. A method for operating a hand-guided processing device (1),
- wherein the processing device (1) comprises a user-activated operating sensor device (2), wherein the operating sensor device (2) comprises a plurality of different detection positions (POa-x),
- wherein the method involves the steps:
a) detecting a sequence (eAB) of activations (Ba-c, Bg-q) of the operating sensor device (2) at different detection positions (POa-c, Pog-q) of the plurality of detection positions (POa-x), and
b) if the detected sequence (eAB) corresponds to a given sequence (vAB), calibrating the operating sensor device (2) for at least one detection position (POa-x) of the plurality of detection positions (POa-x) based on at least one of the activations (Ba-c, Bg-q) of the detected activations (Ba-c, Bg-q),
- wherein the operating sensor device (2) is designed as a capacitive and/or resistive operating sensor device (2'), wherein the one capacitive and/or resistive operating sensor device is touch-sensitive, wherein the activations comprise touch contacts.

2. The method according to claim 1,
- wherein the processing device (1) is a lawnmower (1'), a scarifier, a grass shears, a gyro-shears, a brush cutter, a hedge trimmer, a hedge cutter, a wood cutter, a saw, a separating grinder, a high-branch delimber, a pruning shears, a leaf blower, a blower, a suction device, a leaf vacuum cleaner, a chopper, a sweeper, a sweeper roller, a sweeping brush, a high-pressure cleaner or a cleaning device, and/or
- wherein the processing device (1) comprises a processing tool (3'), wherein the processing tool (3') comprises, in particular is, a cord, especially a cutting cord, a knife (3"), especially a cutting knife (3‴), a cutting blade, a saw blade, a saw chain, a grinding chain, a grinding disc, a razor wheel, a flow impeller or a fluid.

3. The method according to one of the preceding claims,
- wherein the calibrating involves the establishing of at least one activation threshold value (BSWa-x), especially for controlling the processing device (1).

4. The method according to one of the preceding claims,
- wherein the processing device (1) comprises a processing system (3), especially one having a movable processing tool (3'), and/or a riding system (4),
- wherein the method includes the step: controlling the processing system (3), in particular variable setting of a speed of movement and/or a rotary speed (v3', n3') of the processing tool (3'), and/or the riding system (4), especially variable setting of a riding speed (v4), as a function of at least one activation (Bh-k) of the calibrated operating sensor device (2).

5. The method according to one of the preceding claims,
- wherein the processing device (1) comprises a/the processing system (3), especially one having a/the movable processing tool (3'), and/or a/the riding system (4),
- wherein the method includes the step: if the detected sequence (eAB) corresponds to the given sequence (vAB), enabling the processing system (3), especially a processing drive system (3ʺʺ) of the processing system (3), especially for the moving of the processing tool (3'), and/or the riding system (4), especially a riding drive system (4') of the riding system (4).

6. The method according to claim 5,
- wherein the method includes the step: if no activation of the operating sensor device (2) is detected, especially if a given non-activation period (nt) has elapsed since then, blocking the processing system (3) and/or the riding system (4).

7. The method according to one of the preceding claims,
- wherein the method includes especially the step a): detecting a sequence duration (t) for at least a portion (Bg-q) of the sequence (eAB) of activations (Ba-c, Bg-q), and
- wherein the given sequence (vAB) has for at least a portion (Bg-q) of the activations (Ba-c, Bg-q) a minimum sequence duration (t1) and/or a maximum sequence duration (t2), especially longer as compared to the minimum sequence duration (t1).

8. The method according to one of the preceding claims,
- wherein the given sequence (vAB) is characteristic of two actions (Ha, Hb) of a user (100) of the processing device (1), which are independent of each other and especially totally different from each other, wherein in particular the given sequence (vAB) involves simultaneous activations (Ba-c, Bg-q) of the operating sensor device (2) at two detection positions (POa-c, POg-q) of the plurality of detection positions (POa-x), wherein the two detection positions (POa-c, Pog-q) are so distant from each other that the operating sensor device (2) cannot be activated at the same time by one hand (101a, 101b) of the user (100) in the two detection positions (POa-c, POg-q).

9. The method according to one of the preceding claims,
- wherein the operating sensor device (2) comprises a plurality of user-activated, especially capacitive and/or resistive operating sensors (2a-x), wherein the operating sensors (2a-x) comprise the detection positions (POa-x),
- wherein step a) involves: detecting the sequence (eAB) involving activations (Ba-c, Bg-q) of different operating sensors (2a-c, 2g-q) of the plurality of operating sensors (2a-x), and
- wherein step b) involves: if the detected sequence (eAB) corresponds to the given sequence (vAB), calibrating at least one operating sensor (2a-x) of the plurality of operating sensors (2a-x).

10. The method according to one of the preceding claims,
- wherein the processing device (1) comprises a handle (5), especially a guide bar (5'), wherein the operating sensor device (2) extends along the handle (5), especially wherein the detection positions (POa-x) are along the handle (5).

11. The method according to one of the preceding claims,
- wherein step b) involves: calibrating the operating sensor device (2) for at least one detection position (POd-f, POr-x) of the plurality of detection positions (POa-x), wherein no activation of the operating sensor device (2) is detected at the detection position (POd-f, POr-x), by means of interpolation (INT).

12. The method according to one of the preceding claims,
- wherein the processing device (1) comprises a further user-activated operating sensor device (6), especially one of a different kind, especially a force sensor device (6'), especially wherein the operating sensor device (2) and the further operating sensor device (6) are so close together, in particular integrated in each other, that the operating sensor device (2) and the further operating sensor device (6) can be activated at the same time by a hand (101b) of the user (100),
- wherein the method includes the step: if the detected sequence (eAB) corresponds to the given sequence (vAB), enabling a calibrating of the further operating sensor device (6).

13. A processing system (50), especially for carrying out a method according to one of the preceding claims, wherein the processing system (50) comprises:
- a hand-guided processing device (1),
- wherein the processing device (1) comprises a user-activated operating sensor device (2), wherein the operating sensor device (2) comprises a plurality of different detection positions (POa-x), and
- wherein the processing system (50) is designed to:
- detect a sequence (eAB) of activations (Ba-c, Bg-q) of the operating sensor device (2) at different detection positions (POa-c, Pog-q) of the plurality of detection positions (POa-x), and
- if the detected sequence (eAB) corresponds to a given sequence (vAB), calibrate the operating sensor device (2) for at least one detection position (POa-x) of the plurality of detection positions (POa-x) based on at least one of the activations (Ba-c, Bg-q) of the detected activations (Ba-c, Bg-q),
- wherein the operating sensor device (2) is designed as a capacitive and/or resistive operating sensor device (2'), wherein the one capacitive and/or resistive operating sensor device is touch-sensitive, wherein the activations comprise touch contacts.

## Revendications

1. Procédé pour faire fonctionner un appareil de traitement (1) à guidage manuel,
- l'appareil de traitement (1) comprenant un dispositif (2) de détection de commande apte à être actionné par l'utilisateur, le dispositif (2) de détection de commande comprenant une pluralité de positions de détection différentes (POa-x),
- le procédé comprenant les étapes suivantes :
a) détecter une séquence (eAB) d'actionnements (Ba-c, Bg-q) du dispositif (2) de détection de commande à différentes positions de détection (POa-c, Pog-q) parmi la pluralité de positions de détection (POa-x), et
b) si la séquence détectée (eAB) correspond à une séquence prédéfinie (vAB), étalonner le dispositif (2) de détection de commande pour au moins une position de détection (POa-x) de la pluralité de positions de détection (POa-x) sur la base d'au moins un des actionnements (Ba-c, Bg-q) parmi les actionnements détectés (Ba-c, Bg-q),
- le dispositif (2) de détection de commande étant conçu sous la forme d'un dispositif de détection de commande capacitif et/ou résistif (2'), ledit un dispositif de détection de commande capacitif et/ou résistif étant tactile, les actionnements étant tactiles.

2. Procédé selon la revendication 1,
- dans lequel l'appareil de traitement (1) est une tondeuse à gazon (1'), un scarificateur, une cisaille à gazon, un taille-bordures, une débroussailleuse, un taille-haie, un coupe-haie, un taille-arbuste, une scie, une tronçonneuse, une ébrancheuse, une cisaille à branches, un souffleur de feuilles, un souffleur, un aspirateur de feuilles, un broyeur, un balai, une balayeuse, un nettoyeur haute pression ou un appareil de nettoyage, et/ou
- dans lequel l'appareil de traitement (1) comprend un outil de traitement (3'), l'outil de traitement (3') étant notamment un fil, en particulier un fil de coupe, un couteau (3''), en particulier un couteau de coupe (3‴)**,** une lame de coupe, une lame de scie, une chaîne de scie, une chaîne abrasive, une meule, une roue de coupe, une roue de turbine ou un fluide.

3. Procédé selon l'une des revendications précédentes,
- dans lequel l'étalonnage comprend la détermination d'au moins une valeur seuil d'actionnement (BSWa-x), en particulier pour commander l'appareil de traitement (1).

4. Procédé selon l'une des revendications précédentes,
- dans lequel l'appareil de traitement (1) comprend un système de traitement (3), comprenant en particulier un outil de traitement mobile (3'), et/ou un système de déplacement (4),
- le procédé comprenant l'étape suivante : commander le système de traitement (3), en particulier régler de manière variable une vitesse de déplacement et/ou une vitesse de rotation (v3', n3') de l'outil de traitement (3'), et/ou du système de déplacement (4), en particulier régler de manière variable une vitesse de déplacement (v4) en fonction d'au moins un actionnement (Bh-k) du dispositif étalonné (2) de détection de commande.

5. Procédé selon l'une des revendications précédentes,
- dans lequel l'appareil de traitement (1) comprend un système de traitement (3), comprenant en particulier un outil de traitement mobile (3'), et/ou un système de déplacement (4),
- le procédé comprend l'étape suivante : si la séquence détectée (eAB) correspond à la séquence prédéfinie (vAB), libérer le système de traitement (3), en particulier un système d'entraînement de traitement (3ʺʺ) du système de traitement (3), en particulier pour le déplacement de l'outil de traitement (3'), et/ou le système de déplacement (4), en particulier un système d'entraînement de déplacement (4') du système de déplacement (4).

6. Procédé selon la revendication 5,
- dans lequel le procédé comprend l'étape suivante : si aucun actionnement du dispositif (2) de détection de commande n'est détecté, en particulier et depuis qu'une durée d'inactivité prédéterminée (nt) s'est écoulée, bloquer le système de traitement (3) et/ou le système de déplacement (4).

7. Procédé selon l'une des revendications précédentes,
- le procédé, en particulier l'étape a), comprenant : le fait de détecter une durée de séquence (t) pour au moins une partie (Bg-q) de la séquence (eAB) d'actionnements (Ba-c, Bg-q), et
- la séquence prédéfinie (vAB) comprenant, pour au moins une partie (Bg-q) des actionnements (Ba-c, Bg-q), une durée de séquence minimale (t1) et/ou une durée de séquence maximale (t2) plus longue que la durée de séquence minimale (t1).

8. Procédé selon l'une des revendications précédentes,
- dans lequel la séquence prédéfinie (vAB) est caractéristique de deux actions (Ha, Hb) indépendantes l'une de l'autre, en particulier complètement différentes, d'un utilisateur (100) de l'appareil de traitement (1), en particulier dans lequel la séquence prédéfinie (vAB) comprend des actionnements simultanés (Ba-c, Bg-q) du dispositif (2) de détection de commande à deux positions de détection (POa-c, POg-q) parmi la pluralité de positions de détection (POa-x), les deux positions de détection (POa-c, POg-q) étant suffisamment éloignées l'une de l'autre de manière que le dispositif (2) de détection de commande aux deux positions de détection (POa-c, POg-q) ne peut pas être actionné simultanément par une main (101a, 101b) de l'utilisateur (100) .

9. Procédé selon l'une des revendications précédentes,
- dans lequel le dispositif (2) de détection de commande comprend une pluralité de détecteurs de commande (2a-x) actionnables par l'utilisateur, en particulier capacitifs et/ou résistifs, les détecteurs de commande (2a-x) comprenant les positions de détection (POa-x),
- l'étape a) présentant : la détection de la séquence (eAB) comprenant les actionnements (Ba-c, Bg-q) de différents détecteurs de commande (2a-c, 2g-q) de la pluralité de détecteurs de commande (2a-x), et
- l'étape b) comprenant : si la séquence détectée (eAB) correspond à la séquence prédéfinie (vAB), le fait d'étalonner au moins un capteur de commande (2a-x) de la pluralité de capteurs de commande (2a-x).

10. Procédé selon l'une des revendications précédentes,
- dans lequel l'appareil de traitement (1) comprend une poignée (5), en particulier une barre de guidage (5'), le dispositif (2) de détection de commande s'étendant le long de la poignée (5), les positions de détection (POa-x) se trouvant en particulier le long de la poignée (5).

11. Procédé selon l'une des revendications précédentes,
- l'étape b) comprend : l'étalonnage du dispositif (2) de détection de commande pour au moins une position de détection (POd-f, POr-x) de la pluralité de positions de détection (POa-x), aucune activation du dispositif (2) de détection de commande n'étant détectée à la position de détection (POd-f, POr-x), au moyen d'une interpolation (INT).

12. Procédé selon l'une des revendications précédentes,
- dans lequel l'appareil de traitement (1) comprend un autre dispositif (6) de détection de commande, en particulier de type différent, actionnable par l'utilisateur, en particulier un dispositif de détection de force (6'), le dispositif (2) de détection de commande et ledit autre dispositif (6) de détection de commande étant proches l'un de l'autre, en particulier intégrés l'un dans l'autre, au point que le dispositif (2) de détection de commande et ledit autre dispositif (6) de détection de commande sont aptes à être actionnés simultanément par une main (101b) de l'utilisateur (100),
- le procédé comprenant l'étape suivante : si la séquence détectée (eAB) correspond à la séquence prédéfinie (vAB), autoriser un étalonnage dudit autre dispositif (6) de détection de commande.

13. Système de traitement (50), en particulier pour la mise en œuvre d'un procédé selon l'une des revendications précédentes, le système de traitement (50) comprenant :
- un appareil de traitement à guidage manuel (1),
- l'appareil de traitement (1) comprenant un dispositif (2) de détection de commande actionnable par l'utilisateur, le dispositif (2) de détection de commande comprenant une pluralité de positions de détection différentes (POa-x), et
- le système de traitement (50) étant conçu pour :
- détecter une séquence (eAB) d'actionnements (Ba-c, Bg-q) du dispositif (2) de détection de commande à différentes positions de détection (POa-c, Pog-q) de la pluralité de positions de détection (POa-x), et
- si la séquence détectée (eAB) correspond à une séquence prédéfinie (vAB), étalonner le dispositif (2) de détection de commande pour au moins une position de détection (POa-x) de la pluralité de positions de détection (POa-x) sur la base d'au moins un des actionnements (Ba-c, Bg-q) parmi les actionnements détectés (Ba-c, Bg-q),
- le dispositif (2) de détection de commande étant conçu sous la forme d'un dispositif de détection de commande capacitif et/ou résistif (2'), ledit un dispositif de détection de commande capacitif et/ou résistif étant tactile, les actionnements étant tactiles.
